# EUROPEAN PATENT APPLICATION

(11) **EP 4 841 953 A1**
(43) Date of publication of application: **18.11.2026**
(21) Application number: 24925853.4
(22) Date of filing: 22.02.2024
(51) Int. Cl.: H04L 43/0876

(54) **COMMUNICATION ENVIRONMENT EVALUATION DEVICE, COMMUNICATION ENVIRONMENT EVALUATION SYSTEM, AND COMMUNICATION ENVIRONMENT EVALUATION METHOD**

(71) Applicant: Mitsubishi Electric Corporation, Tokyo 100-8310 (JP)
(72) Inventor: HASEGAWA, Masahiko, Tokyo 100-8310 (JP); AOYAMA, Tetsuya, Tokyo 100-8310 (JP); OGA, Masao, Tokyo 100-8310 (JP)
(74) Representative: Pfenning, Meinig & Partner mbB
(86) International application number: PCT/JP2024/006479
(87) International publication number: WO 2025/177521

(57) **Abstract**

A communication environment evaluation apparatus (10) is characterized by including: an information acquisition unit that acquires received data of communication packets of a plurality of applications transmitted between an on-vehicle wireless communication apparatus (3) installed in a vehicle (2) and a ground wireless communication apparatus (8) installed on the ground; an application identification unit that identifies each of the applications; and an evaluation unit that analyzes the received data of the application identified and evaluates a change in a communication environment for each of the applications.

## Description

### Field

The present disclosure relates to a communication environment evaluation apparatus, a communication environment evaluation system, and a communication environment evaluation method, which are used for evaluating a communication environment for wireless communication between an on-vehicle side and a ground side.

### Background

In the 3rd Generation Partnership Project (3GPP; registered trademark), which is a standardization organization for mobile communication systems, a fifth-generation (hereinafter may be referred to as "5G") wireless access system has been studied. Currently, mobile communication systems used in railway operation services are often constructed as private networks designed, built, and managed by railway operators; however, utilization of a 5G system is also expected in wireless communication performed between an on-vehicle side and a ground side in fields such as railways.

In Japan, commercial 5G services by communication carriers have been provided in stages from around 2020. In addition, institutionalization of Local 5G has also progressed as a scheme in which local companies, municipalities, and the like construct 5G networks spot-wise within their own buildings or premises. Compared with a conventional communication system, a 5G system has characteristics such as high-speed communication, high capacity, low latency, high reliability, and a large number of simultaneous connections. By taking advantage of these characteristics, for example, in the railway field, an increase in new applications such as automated driving, train control, and on-vehicle video monitoring is expected.

In a wireless communication system, communication quality changes over time; therefore, grasping current communication quality is important for stable operation of the system. For example, Patent Literature 1 proposes a method for evaluating a communication environment for each communication path in a system in which a plurality of types of communication paths are available.

### Citation List

### Patent Literature

Patent Literature 1: WO 2022/219730 A1

### Summary

### Technical Problem

However, in the above conventional technique, even when data of a plurality of applications is transmitted over a single communication path, the communication environment is evaluated for each communication path. Thus, the conventional technique has a problem in that the communication environment cannot be evaluated for each application. Since prerequisite design requirements and required performance requirements differ for each application, it is important to evaluate the communication environment for each application and manage communication quality.

The present disclosure has been made in view of the above circumstances, and an object thereof is to provide a communication environment evaluation apparatus capable of evaluating a communication environment for each application.

### Solution to Problem

In order to solve the above-described problems and achieve the object, a communication environment evaluation apparatus according to the present disclosure includes: an information acquisition unit to acquire received data of communication packets of a plurality of applications transmitted between an on-vehicle wireless communication apparatus installed in a vehicle and a ground wireless communication apparatus installed on a ground; an application identification unit to identify the application of each of the communication packets; and an evaluation unit to analyze the received data of the application identified and to evaluate a change in a communication environment for each application.

### Advantageous Effects of Invention

The communication environment evaluation apparatus according to the present disclosure provides an effect that it is possible to evaluate a communication environment for each application.

### Brief Description of Drawings

FIG. 1 is a diagram illustrating an exemplary configuration of a communication environment evaluation system according to a first embodiment.
FIG. 2 is a diagram illustrating an exemplary functional configuration of a communication environment evaluation apparatus illustrated in FIG. 1.
FIG. 3 is a diagram illustrating an example of received data acquired by an information acquisition unit illustrated in FIG. 2.
FIG. 4 is a diagram illustrating an example of data classification performed by an application identification unit illustrated in FIG. 2.
FIG. 5 is an explanatory diagram illustrating an exemplary operation of a feature calculation unit illustrated in FIG. 2.
FIG. 6 is a diagram illustrating an example of data accumulated in a feature DB illustrated in FIG. 2.
FIG. 7 is a flowchart for describing learning processing for generating a learned model.
FIG. 8 is an explanatory diagram illustrating generation of a learned model.
FIG. 9 is an explanatory diagram illustrating an operation of an evaluation unit illustrated in FIG. 2.
FIG. 10 is a flowchart for describing evaluation processing for evaluating a communication environment.
FIG. 11 is a diagram illustrating an example of a display screen output by a display unit illustrated in FIG. 2.
FIG. 12 is a diagram illustrating an exemplary configuration of a communication environment evaluation system according to a second embodiment.
FIG. 13 is an explanatory diagram of functions of a data aggregation apparatus in FIG. 12.
FIG. 14 is a diagram illustrating an example of received data acquired by a communication environment evaluation apparatus illustrated in FIG. 12.
FIG. 15 is a flowchart for describing learning processing in the second embodiment.
FIG. 16 is an explanatory diagram of processing for calculating reception intervals of communication packets in a third embodiment.
FIG. 17 is a flowchart for describing learning processing in the third embodiment.
FIG. 18 is an explanatory diagram of the learning processing in the third embodiment.
FIG. 19 is a diagram illustrating an exemplary configuration of a communication environment evaluation system according to a fourth embodiment.
FIG. 20 is a diagram illustrating an exemplary configuration of a communication environment evaluation system according to a modification example of the fourth embodiment.
FIG. 21 is a diagram illustrating an exemplary configuration of a communication environment evaluation system according to a fifth embodiment.
FIG. 22 is a diagram illustrating an exemplary configuration of a communication environment evaluation system according to a modification example of the fifth embodiment.
FIG. 23 is a diagram illustrating an exemplary hardware configuration of the communication environment evaluation apparatuses according to the first to fifth embodiments and the data aggregation apparatus according to the second embodiment.

### Description of Embodiments

Hereinafter, communication environment evaluation apparatuses, communication environment evaluation systems, and communication environment evaluation methods according to embodiments of the present disclosure will be described in detail with reference to the drawings.

### First Embodiment.

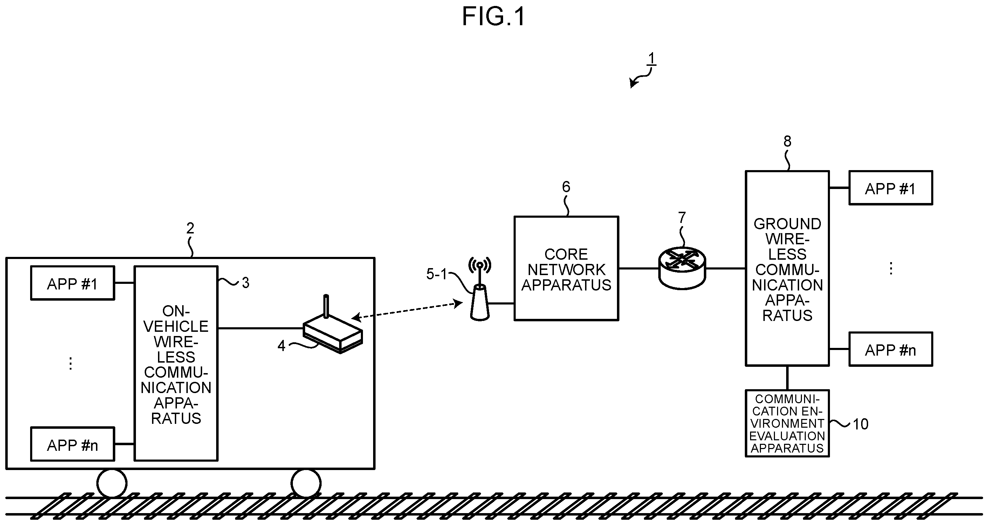

FIG. 1 is a diagram illustrating an exemplary configuration of a communication environment evaluation system 1 according to a first embodiment. The communication environment evaluation system 1 includes an on-vehicle wireless communication apparatus 3 and an on-vehicle terminal 4 that are installed in a vehicle 2 of a train, and a base station 5, a core network apparatus 6, a connection router 7, a ground wireless communication apparatus 8, and a communication environment evaluation apparatus 10 that are installed on the ground. Multiple applications represented by App #1 to App #n share a wireless section in ground-to-vehicle communication. Data is transmitted at different cycles for each application.

For example, communication packets transmitted by the on-vehicle wireless communication apparatus 3 are transmitted to the ground wireless communication apparatus 8 via the on-vehicle terminal 4, the base station 5, the core network apparatus 6, and the connection router 7. The communication environment evaluation apparatus 10 acquires received data, which is data of the communication packets received by the ground wireless communication apparatus 8 from the on-vehicle wireless communication apparatus 3 as described above, and evaluates a communication environment for each application. The communication environment evaluation apparatus 10 may be disposed on the cloud.

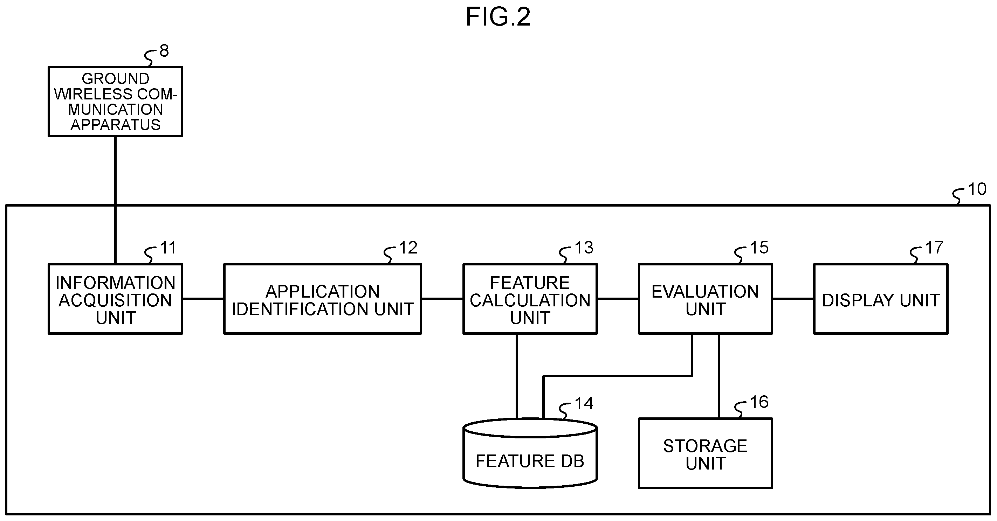

FIG. 2 is a diagram illustrating an exemplary functional configuration of the communication environment evaluation apparatus 10 illustrated in FIG. 1. The communication environment evaluation apparatus 10 includes an information acquisition unit 11, an application identification unit 12, a feature calculation unit 13, a feature DataBase (DB) 14, an evaluation unit 15, a storage unit 16, and a display unit 17.

The information acquisition unit 11 extracts received data, which is information of the communication packets received by the ground wireless communication apparatus 8. The information acquisition unit 11 may acquire, as received data, not only data included in each received communication packet but also data relating to each received communication packet. For example, the information acquisition unit 11 may acquire data such as reception time data generated in the ground wireless communication apparatus 8 upon receipt of the communication packet, and data acquired from inside or outside the communication environment evaluation system 1 based on the data included in the received communication packet.

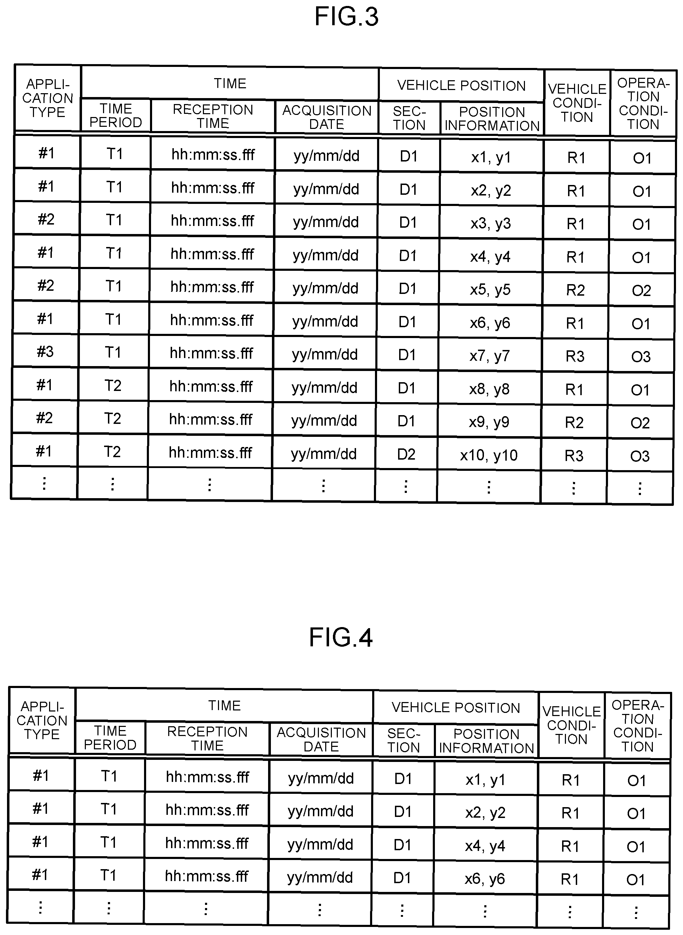

FIG. 3 is a diagram illustrating an example of the received data acquired by the information acquisition unit 11 illustrated in FIG. 2. The received data illustrated in FIG. 3 includes: an application type that is information for identifying a type of an application; a time period, a reception time, and an acquisition date that indicate a time at which a communication packet is received; and vehicle information, namely, a vehicle position, a vehicle condition, and an operation condition. The application type is, for example, data included in the received communication packet. For example, the application type is information such as a protocol, a port number, and a data length. The time period is information representing the reception time in the form of a time range. For example, the time period is information added by the information acquisition unit 11 based on reception time information added by the ground wireless communication apparatus 8. In the example of FIG. 3, the vehicle position includes a section and position information. The vehicle position may be included in the received communication packet. Alternatively, the vehicle position may be acquired by specifying the vehicle 2 based on the information included in the communication packet and acquiring position information of the vehicle 2 from a train operation management system (not illustrated) or the like. The section is information representing the vehicle position in the form of a position range. For example, the section is information added by the information acquisition unit 11 based on the acquired vehicle position.

The vehicle condition is, for example, information such as a vehicle type and an antenna installation position of the vehicle. The antenna installation position may be, for example, information indicating whether the antenna is installed indoors or outdoors. The operation condition is, for example, operation information of the vehicle, such as a line section and a traveling direction. The traveling direction may be, for example, information indicating whether the traveling direction is an upward direction or a downward direction. The information acquisition unit 11 outputs the acquired received data to the application identification unit 12.

Return to the description of FIG. 2. The application identification unit 12 classifies the communication packets for each application based on the received data acquired by the information acquisition unit 11. The application identification unit 12 identifies each application based on application-type information acquired by the information acquisition unit 11, and classifies the received data for each application. An example of a method for identifying an application includes a method based on a protocol, a port number, a data length, and the like. For example, when the application-type information acquired by the information acquisition unit 11 has a one-to-one correspondence with an application, the application identification unit 12 can identify the corresponding application for each application-type value. Alternatively, the application identification unit 12 may identify an application using a combination of a plurality of types of information. Furthermore, the application identification unit 12 can classify the received data based on the received data acquired by the information acquisition unit 11. For example, the application identification unit 12 can classify the received data based on the time period, the section, the vehicle condition, and the operation condition. For example, the application identification unit 12 classifies the received data for each combination of the time period, the section, the vehicle condition, and the operation condition. The application identification unit 12 outputs the received data to the feature calculation unit 13 in association with the identified application and classification information.

FIG. 4 is a diagram illustrating an example of data classification performed by the application identification unit 12 illustrated in FIG. 2. In the example illustrated in FIG. 4, the application identification unit 12 classifies the received data based on the application type; the time period, the reception time, and the acquisition date that indicate a time at which a communication packet is received; the section and the position information that indicate the vehicle position; the vehicle condition; and the operation condition.

For each classification performed by the application identification unit 12, the feature calculation unit 13 calculates features indicating characteristics of communication packets. Specifically, the feature calculation unit 13 can calculate reception intervals from differences between reception times of communication packets, and can calculate, as features, Probability Density Functions (PDFs) of the reception intervals. In addition to the probability density function of the reception intervals, the feature may be a packet loss rate calculated from sequence numbers per unit time, or may be a reception-side throughput calculated from a data amount of received communication packets.

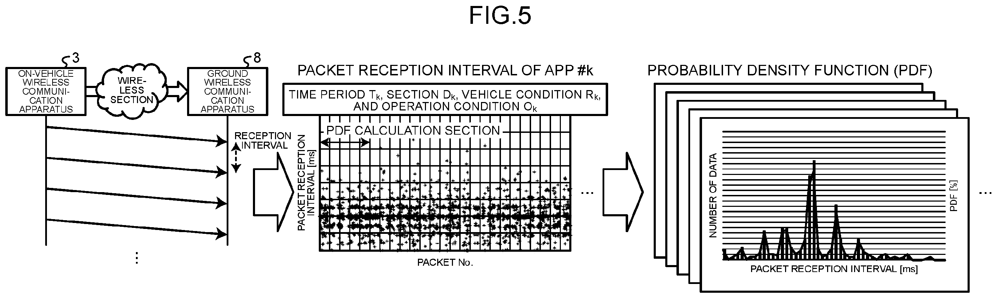

FIG. 5 is an explanatory diagram illustrating an exemplary operation of the feature calculation unit 13 illustrated in FIG. 2. As illustrated in FIG. 5, the feature calculation unit 13 calculates reception intervals, at the ground wireless communication apparatus 8, of communication packets transmitted from the on-vehicle wireless communication apparatus 3 to the ground wireless communication apparatus 8 via a wireless section. In FIG. 5, a packet reception interval of App #k is calculated. In the middle diagram of FIG. 5, the horizontal axis indicates a packet number, and the vertical axis indicates the reception interval of a communication packet of that packet number. Here, since the packet number is increased each time a communication packet is received, the communication packet having the largest packet number is the most recently received communication packet. The feature calculation unit 13 calculates probability density functions of the reception intervals for each specific section based on the calculated reception intervals. As illustrated in FIG. 5, a section used in calculating the PDF is referred to as a PDF calculation section.

Although reception intervals of communication packets have some fluctuation, the distribution tends to concentrate on a specific value in accordance with a transmission cycle of an application. The fluctuation of the reception intervals of the communication packets becomes large due to, for example, deterioration of a radio environment or a traffic environment and occurrence of packet loss in a wireless section. By using, as features, the PDFs of the reception intervals and analyzing changes in fluctuation of the reception intervals for each application, it is possible to evaluate the communication environment.

However, when reception dates of communication packets differ, or when the received data is received data in a subsequent vehicle 2 in an operation timetable, the reception interval becomes long. In addition, in an application in which traffic volume is large and data is divided into a plurality of communication packets and transmitted, and thus a large number of packets are transmitted at once, the reception interval may become short regardless of the transmission cycle of the application. For this reason, it is desirable to exclude, from analysis targets, reception interval data that are outside analysis targets as described above.

Return to the description of FIG. 2. The feature DB 14 is a database that accumulates features calculated by the feature calculation unit 13. The feature DB 14 stores features for each combination of an application type, a time period at which a communication packet is received, a section, a vehicle condition, and an operation condition. The feature DB 14 also accumulates learned models. The feature DB 14 accumulates, for each application type and for each classification in which the time period, the section, the vehicle condition, and the operation condition are combined, features and learned models. Note that the feature DB 14 stores only data when communication is normally executed, and does not store data when an anomaly occurs in communication.

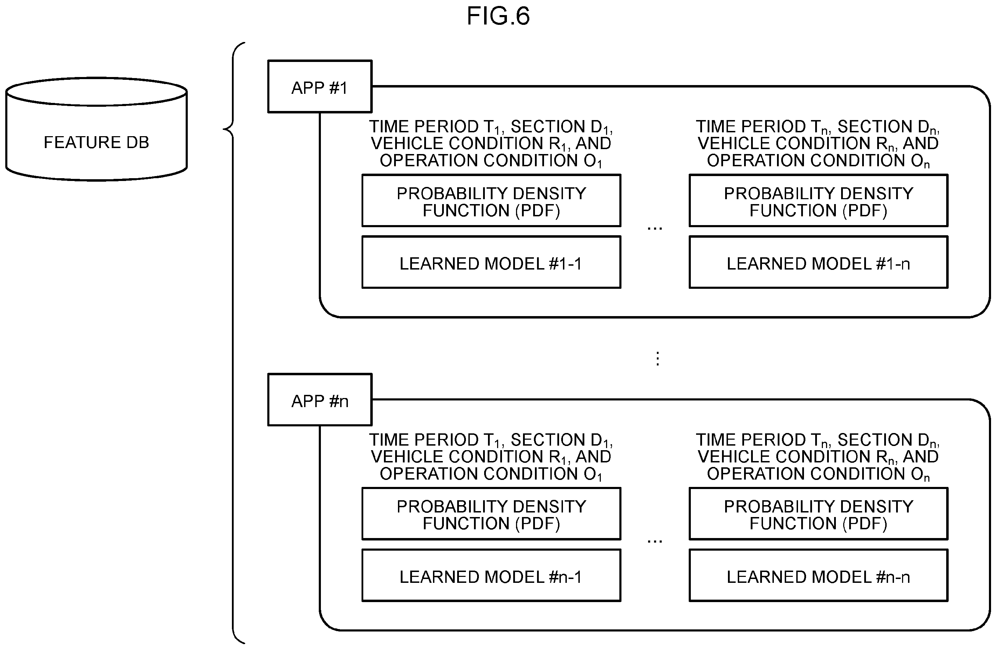

FIG. 6 is a diagram illustrating an example of data accumulated in the feature DB 14 illustrated in FIG. 2. FIG. 6 illustrates an example in which probability density functions (PDFs) of reception intervals are accumulated as features. Features are accumulated for each of the applications represented by App #1 to App #n. For each classification performed by the application identification unit 12, the features are associated with a corresponding learned model.

Note that a learned model is generated by causing a learner to learn data accumulated in the feature DB 14. In this case, the learner may be provided in the feature DB 14, or the feature DB 14 and the learner may be provided separately.

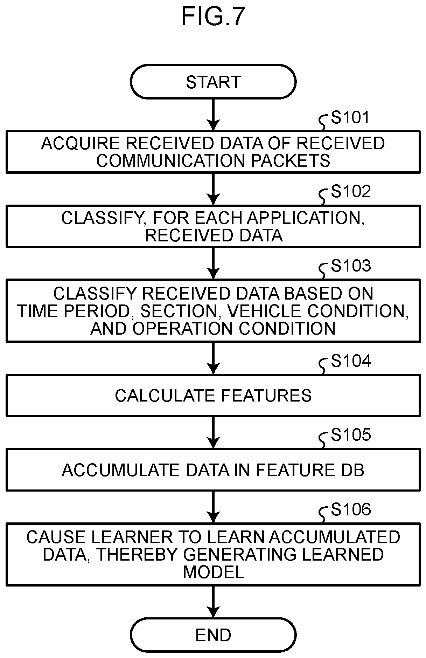

FIG. 7 is a flowchart for describing learning processing for generating a learned model. The information acquisition unit 11 acquires the received data of the communication packets received by the ground wireless communication apparatus 8 (step S101).

The application identification unit 12 classifies, for each application, the received data of the communication packets (step S102). In addition, the application identification unit 12 classifies the received data based on contents of the received data such as the time period, the section, the vehicle condition, and the operation condition (step S103).

For each classification performed by the application identification unit 12, the feature calculation unit 13 calculates features of the communication packets (step S104). The feature calculation unit 13 accumulates, in the feature DB 14, the calculated feature data (step S105). The feature DB 14 causes the learner to learn the accumulated data, thereby generating a learned model (step S106). Note that the feature DB 14 stores the generated learned model in association with the feature data. The learned model is for obtaining an evaluation result based on the features. The learner may be provided in the feature DB 14, or the feature DB 14 and the learner may be provided separately.

In addition, information on the features stored in the feature DB 14 described above and the learned model may be stored in advance in the feature DB 14. In this case, a learning flow can be omitted.

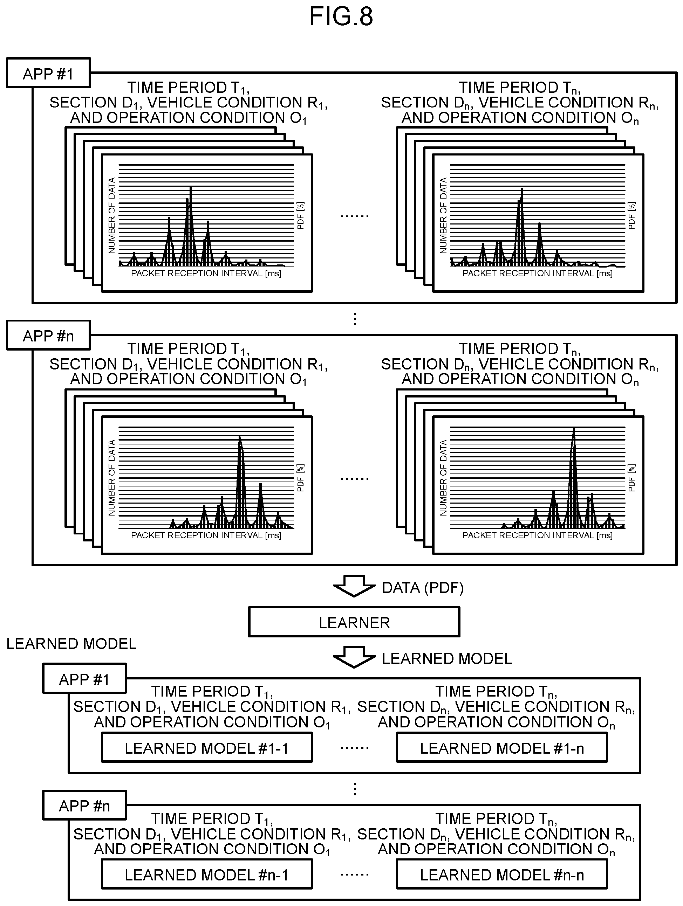

FIG. 8 is an explanatory diagram illustrating generation of a learned model. The feature DB 14 generates a learned model for outputting an evaluation result of a communication environment based on features, using data accumulated in the feature DB 14. As illustrated in FIG. 8, the data accumulated in the feature DB 14 includes features accumulated for each application and for each classification based on the values of the received data. In FIG. 8, packet reception intervals are accumulated as features for each combination of the time period, the section, the vehicle condition, and the operation condition. In each of a plurality of graphs in the upper diagram of FIG. 8, the horizontal axis represents a reception interval of a communication packet, the vertical axis of the bar graph represents the number of data, and the vertical axis of the line graph represents a PDF.

The accumulated data as described above is input into the learner, and learned models are generated for each application and for each classification based on the values of the received data. In addition, the generated learned models are stored for each application and for each of the above classifications.

Here, a case where k-Nearest Neighbor (kNN), which is a clustering technique, is applied will be described. kNN is a technique for analyzing evaluation target data using learning data. Thus, unlike other machine learning algorithms, in a learning phase, there is no processing such as parameter adjustment. Accordingly, when kNN is used, the processing of generating the learned model described above refers to processing of classifying and storing learning data. Specifically, the learner acquires, as learning data, features obtained when the communication environment is in a normal state, and classifies and stores the features for each application type, time period when the data is acquired, section, vehicle condition, and operation condition.

Return to the description of FIG. 2. The evaluation unit 15 has a function of analyzing received data of communication packets and evaluating a change in a communication environment for each application. Specifically, the evaluation unit 15 can evaluate the communication environment using the features calculated by the feature calculation unit 13 and the learned model stored in the feature DB 14.

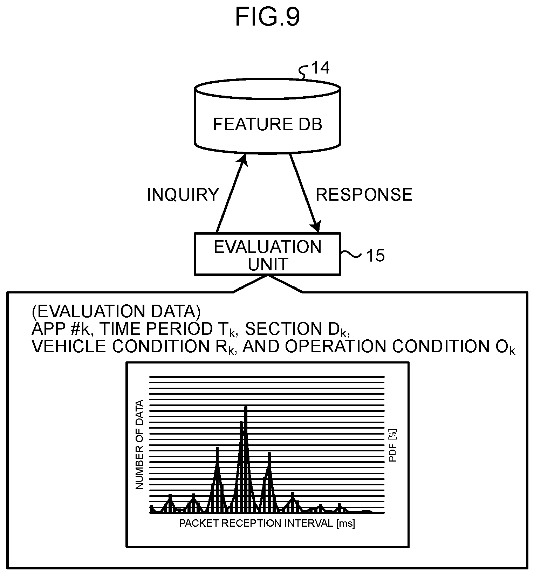

FIG. 9 is an explanatory diagram illustrating an operation of the evaluation unit 15 illustrated in FIG. 2. The evaluation unit 15 inquires of the feature DB 14 for a learned model having the same conditions by inputting to the feature DB 14, as input conditions, an application type of evaluation-target received data, a time period when the data is acquired, a section, a vehicle condition, and an operation condition. The feature DB 14 returns, as a response to the evaluation unit 15, the learned model having the same conditions as the input conditions. The evaluation unit 15 inputs the features into the learned model that matches the input conditions, and obtains an evaluation result output from the learned model.

The evaluation result may be, for example, a risk level. In kNN, k neighboring data items are extracted from learning data with respect to evaluation target data, and respective distances between the evaluation target data and the neighboring data items are calculated. That is, when the evaluation unit 15 inputs the features of the evaluation target into the learned model, a distance is output as the evaluation result. The learned model is learned only with data obtained when the communication environment is in a normal state. Since this distance is a difference between the features of the learning data obtained in the normal state and the features of the evaluation target data, the distance can be used as a risk level indicating a difference from the normal state. Accordingly, it can be confirmed that a higher risk level indicates a greater change from the normal communication environment in the evaluation target data.

In the present embodiment, the evaluation unit 15 has been described as outputting an evaluation result of the communication environment using the learned model that has been learned by the learner included in the feature DB 14. However, the evaluation unit 15 may acquire a learned model from an external source and output an evaluation result based on the acquired learned model.

In this manner, the evaluation unit 15 can output an evaluation result obtained based on features of communication packets to the display unit 16.

Note that in the present embodiment, a case where kNN is applied as a learning algorithm has been described; however, the present disclosure is not limited thereto. As the learning algorithm, reinforcement learning, supervised learning, unsupervised learning, semi-supervised learning, or the like may be applied.

In addition, as a learning algorithm used by the learner, deep learning, which learns to extract features themselves, may be used. Alternatively, other known methods may be used.

In addition, without being limited to kNN as described above, a known clustering technique such as non-hierarchical clustering by a k-means method or hierarchical clustering such as a single linkage method may be used.

In addition, the functions of the learner and the evaluation unit 15 may be implemented by an apparatus that is connected to the communication environment evaluation apparatus 10 via, for example, a network and is separate from the communication environment evaluation apparatus 10. In addition, the functions of the learner and the evaluation unit 15 may exist on a cloud server. In addition, as long as conditions such as applications used are the same, the learning data may be features acquired by another communication environment evaluation apparatus 10.

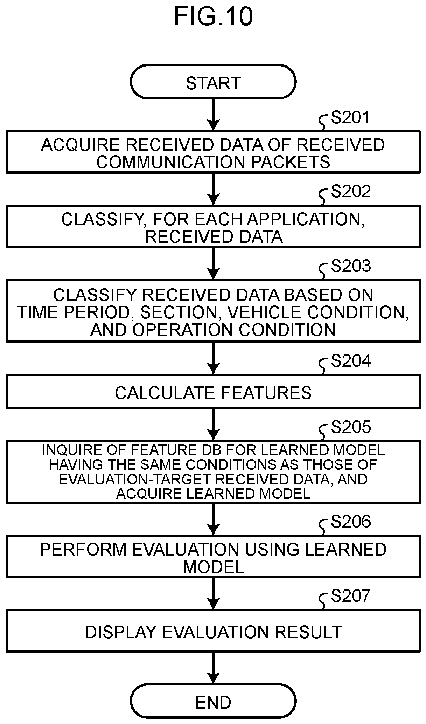

FIG. 10 is a flowchart for describing evaluation processing for evaluating a communication environment. The information acquisition unit 11 acquires the received data of the communication packets received by the ground wireless communication apparatus 8 (step S201).

The application identification unit 12 classifies, for each application, the received data of the communication packets (step S202). In addition, the application identification unit 12 classifies the received data based on contents of the received data such as the time period, the section, the vehicle condition, and the operation condition (step S203).

The feature calculation unit 13 calculates features of the communication packets for each classification performed by the application identification unit 12 (step S204).

Subsequently, the evaluation unit 15 inquires of the feature DB 14 for a learned model having the same conditions as those of evaluation-target received data, and acquires the learned model (step S205).

The evaluation unit 15 evaluates the communication environment using the acquired learned model (step S206). The display unit 17 displays the evaluation result on a display screen (step S207).

Return to the description of FIG. 2. The storage unit 16 accumulates an evaluation result from the evaluation unit 15. The display unit 17 displays the evaluation result accumulated in the storage unit 16 on the display screen. The storage unit 16 accumulates the generated evaluation result each time an evaluation result is generated. In addition, the display unit 17 updates display contents each time the evaluation result is updated.

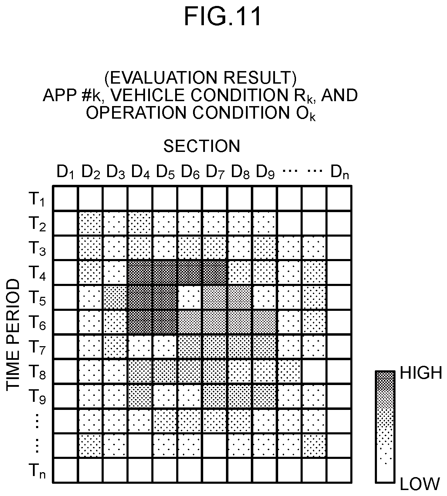

FIG. 11 is a diagram illustrating an example of a display screen output by the display unit 17 illustrated in FIG. 2. The display unit 17 displays a risk level, which is an evaluation result, for each application and for each combination of a vehicle condition and an operation condition. FIG. 11 illustrates a risk level having conditions of App #k, a vehicle condition Rₖ, and an operation condition Oₖ. The horizontal axis of FIG. 11 represents a section, and the vertical axis represents a time period. A risk level in each of sections D₁ to Dₙ for each of time periods T₁ to Tₙ can be represented by a color or a pattern by which each cell is filled. In the example of FIG. 11, a pattern by which each cell is filled is changed in accordance with the risk level.

As described above, the communication environment evaluation apparatus 10 according to the first embodiment is characterized by including the information acquisition unit 11 that acquires received data of communication packets of a plurality of applications transmitted between the on-vehicle wireless communication apparatus 3 installed in the vehicle 2 and the ground wireless communication apparatus 8 installed on the ground, the application identification unit 12 that identifies an application of each communication packet, and the evaluation unit 15 that analyzes the received data of the identified application and evaluates a change in a communication environment for each application. With such a configuration, it becomes possible to evaluate a change in a communication environment for each application type based on the received data of the received communication packets.

The importance of a change in a communication environment, and countermeasures for a change in a communication environment differ depending on an application. For example, even if a communication environment for an application for displaying an advertisement to passengers of the vehicle 2 deteriorates, the deterioration merely results in the advertisement not being displayed for a certain period, and thus has little influence on operation of the vehicle 2. However, if a communication environment for an application for automated driving of the vehicle 2 deteriorates, the situation may, depending on circumstances, develop into an event that may affect human lives. Therefore, for example, when the communication environment begins to deteriorate, it is possible, before a communication failure occurs, to take countermeasures such as stopping the vehicle 2 at a safe place or stopping communications of lower-importance applications other than the application for automated driving.

In addition, the communication environment evaluation apparatus 10 may further include the feature calculation unit 13 that calculates features indicating the characteristics of the communication packets from the received data, and the evaluation unit 15 may analyze the communication packets based on the features calculated by the feature calculation unit 13. The features may be any features as long as the features take values in accordance with communication quality, and may be, for example, reception intervals of communication packets, a packet loss rate, or reception-side throughput.

In addition, the communication environment evaluation apparatus 10 may further include the feature DB 14 that accumulates features calculated by the feature calculation unit 13 for each classification based on the received data. The "classification" is determined, for example, by a combination of an application type, a time period, a section, a vehicle condition, and an operation condition. Note that, in the above embodiment, the classification is determined using all of the application type, the time period, the section, the vehicle condition, and the operation condition; however, the classification may be determined based on at least one of the application type, the time period, the section, the vehicle condition, and the operation condition. In addition, the feature DB 14 may also store, for each classification described above, a learned model for outputting an evaluation result of the communication environment based on the features. Thus, the evaluation unit 15 can acquire, from the feature DB 14, a learned model corresponding to the classification of the received data of the communication packets acquired by the information acquisition unit 11, and can evaluate the communication environment using the features of the communication packets and the acquired learned model.

In addition, the communication environment evaluation apparatus 10 may further include the storage unit 16 that accumulates an evaluation result from the evaluation unit 15, and the display unit 17 that displays, based on the evaluation result accumulated in the storage unit 16, the evaluation result on a display screen for each classification based on the received data. For example, as illustrated in FIG. 11, the display unit 17 can display an evaluation result for each time period and for each section in which the vehicle 2 is located, regarding an application for which the evaluation result is to be displayed, a vehicle condition of the vehicle 2 in which the on-vehicle wireless communication apparatus 3 for transmitting communication packets is installed, and an operation condition of the vehicle 2.

Note that, in the first embodiment, the communication environment evaluation apparatus 10 is installed on the ground. The information acquisition unit 11 thus acquires received data of communication packets transmitted by the on-vehicle wireless communication apparatus 3 and received by the ground wireless communication apparatus 8. Since the ground wireless communication apparatus 8 receives communication packets from on-vehicle wireless communication apparatuses 3 of a plurality of vehicles 2, the communication environment evaluation apparatus 10 thus acquires received data of communication packets transmitted between the plurality of on-vehicle wireless communication apparatuses 3 and the ground wireless communication apparatus 8.

The received data includes information included in communication packets, information generated in association with transmission of the communication packets, information regarding a transmission-source apparatus or a transmission-destination apparatus of the communication packets, and the like. For example, the information acquisition unit 11 can acquire received data including at least one of information indicating an application type, information indicating a reception time of a communication packet, and vehicle information indicating characteristics of the vehicle 2 in which the on-vehicle wireless communication apparatus 3 for transmitting the communication packet is installed. The application identification unit 12 classifies the communication packets based on the received data. Thus, it becomes possible to specify a time and a section in which a change in the communication environment is occurring.

The vehicle information is information including at least one of position information of the vehicle 2, a vehicle condition of the vehicle 2, and an operation condition of the vehicle 2. The vehicle condition is, for example, information such as a vehicle type and an antenna installation position of the vehicle 2. The antenna installation position may be, for example, information indicating whether the antenna is installed indoors or outdoors. The operation condition is, for example, operation information of the vehicle 2, such as a line section and a traveling direction. The traveling direction may be, for example, information indicating whether the traveling direction is an upward direction or a downward direction.

In addition, according to the first embodiment, it is possible to provide the communication environment evaluation system 1. The communication environment evaluation system 1 is a communication environment evaluation system 1 for evaluating communication environments of communication packets of a plurality of applications transmitted between the on-vehicle wireless communication apparatus 3 installed in the vehicle 2 and the ground wireless communication apparatus 8 installed on the ground, and is characterized by including the communication environment evaluation apparatus 10 including the information acquisition unit 11 that acquires received data of the communication packets of the plurality of applications transmitted between the on-vehicle wireless communication apparatus 3 and the ground wireless communication apparatus 8, the application identification unit 12 that identifies an application of each communication packet, and the evaluation unit 15 that analyzes the received data of the identified application and evaluates a change in the communication environment for each application.

In addition, according to the first embodiment, it is also possible to provide a communication environment evaluation method. The communication environment evaluation method is executed by the communication environment evaluation apparatus 10, and is characterized by including a step of acquiring received data of communication packets of a plurality of applications transmitted between the on-vehicle wireless communication apparatus 3 installed in a vehicle and the ground wireless communication apparatus 8 installed on the ground, a step of identifying an application of each communication packet, and a step of analyzing the received data of the identified application and evaluating a communication environment for each application. In addition, the communication environment evaluation method may be executed by the communication environment evaluation system 1.

### Second Embodiment.

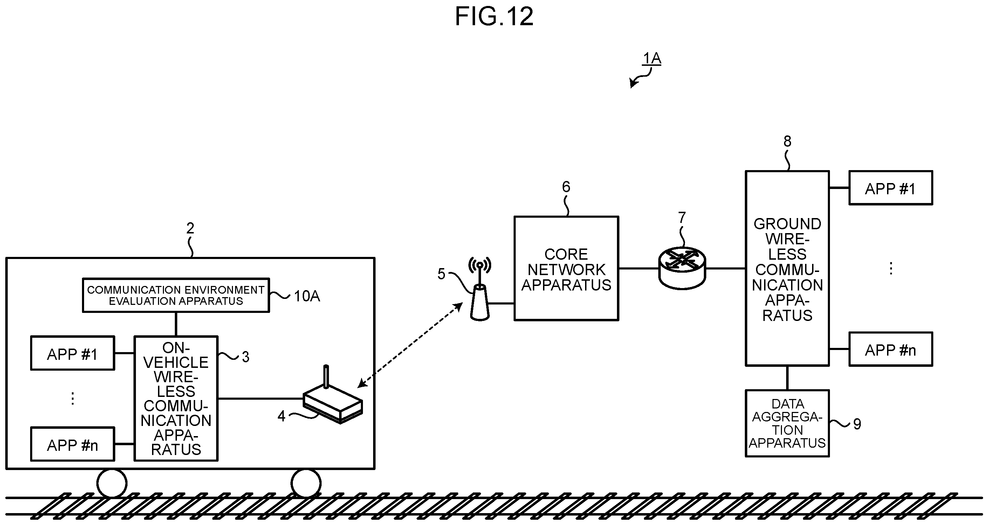

FIG. 12 is a diagram illustrating an exemplary configuration of a communication environment evaluation system 1A according to a second embodiment. The communication environment evaluation system 1A further includes a data aggregation apparatus 9 in addition to components of the communication environment evaluation system 1. In addition, the communication environment evaluation system 1 includes the communication environment evaluation apparatus 10 connected to the ground wireless communication apparatus 8, whereas the communication environment evaluation system 1A includes a communication environment evaluation apparatus 10A connected to the on-vehicle wireless communication apparatus 3. Hereinafter, differences from the communication environment evaluation system 1 will mainly be described.

The communication environment evaluation system 1A analyzes communication packets received on the vehicle 2 side. Although FIG. 12 illustrates only a single vehicle 2, in practice, the communication environment evaluation system 1A includes the on-vehicle wireless communication apparatuses 3 and the communication environment evaluation apparatuses 10A installed in respective ones of the plurality of vehicles 2, and the data aggregation apparatus 9 installed on the ground side aggregates evaluation results and information on features from the communication environment evaluation apparatuses 10A installed in the plurality of respective vehicles 2.

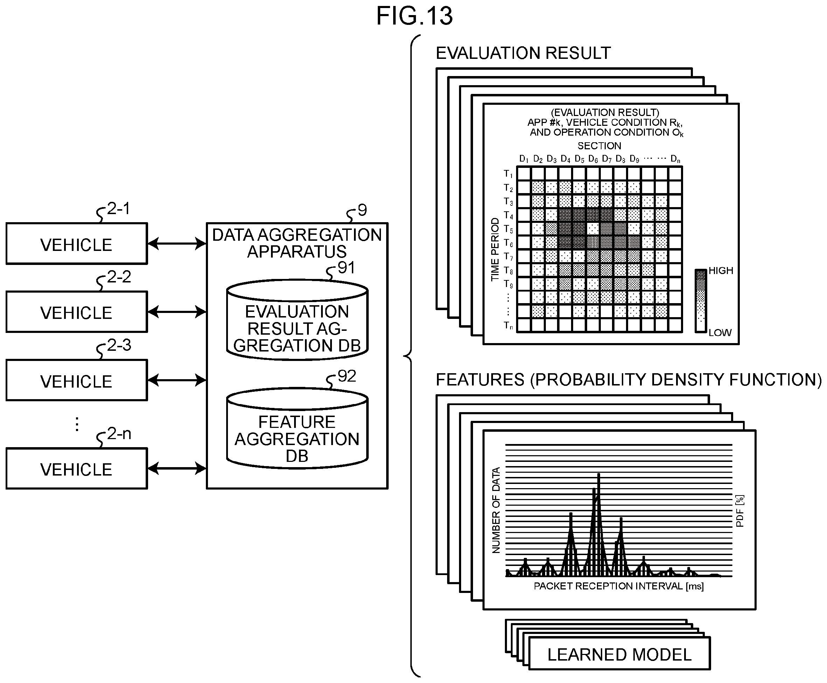

FIG. 13 is an explanatory diagram of functions of the data aggregation apparatus 9 in FIG. 12. The data aggregation apparatus 9 includes an evaluation result aggregation DB 91 and a feature aggregation DB 92. The data aggregation apparatus 9 aggregates, from each of a plurality of vehicles 2-1 to 2-n, evaluation results and information on features of the communication environment evaluation apparatus 10A. The data aggregation apparatus 9 accumulates the aggregated evaluation results in the evaluation result aggregation DB 91, and accumulates the aggregated features and learned models in the feature aggregation DB 92.

A functional configuration of the communication environment evaluation apparatus 10A is the same as that of the communication environment evaluation apparatus 10 according to the first embodiment. However, since data acquired by the information acquisition unit 11 is only data of communication packets received in the vehicle 2 in which the communication environment evaluation apparatus 10A is installed, the vehicle condition and the operation condition are fixed.

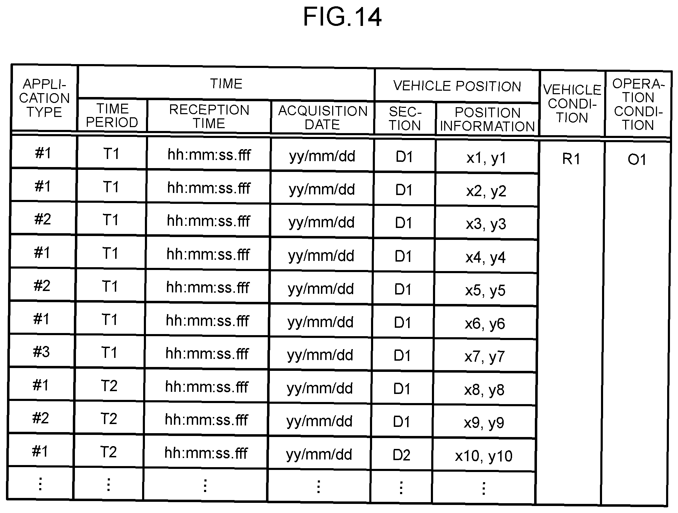

FIG. 14 is a diagram illustrating an example of received data acquired by the communication environment evaluation apparatus 10A illustrated in FIG. 12. The received data illustrated in FIG. 14 includes an application type; a time period, a reception time, and an acquisition date that indicate a time at which a communication packet is received; a section and position information that indicate a position of the vehicle 2; a vehicle condition; and an operation condition. The received data illustrated in FIG. 14 differs from the received data in the first embodiment illustrated in FIG. 3 in that the vehicle condition and the operation condition are fixed.

An operation of the communication environment evaluation apparatus 10A is the same as that of the communication environment evaluation apparatus 10 according to the first embodiment; however, a learner may be provided in the feature aggregation DB 92 to generate a learned model based on aggregated data for each vehicle condition and operation condition.

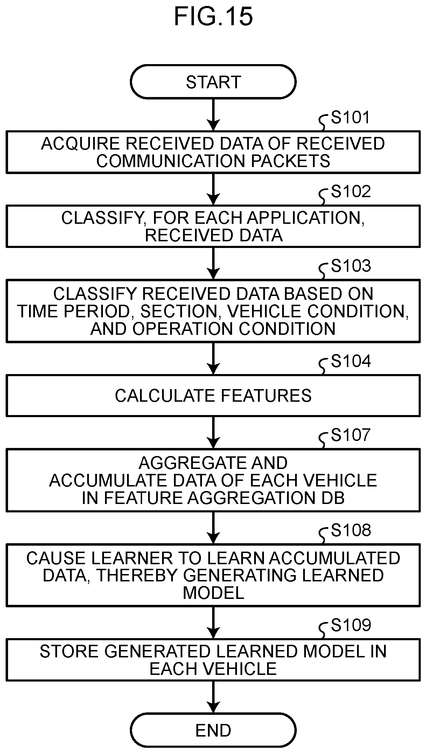

FIG. 15 is a flowchart for describing learning processing in the second embodiment. Processing of steps S101 to S104 is the same as that in the first embodiment illustrated in FIG. 7. However, the term "received communication packets" refers to "communication packets received by the on-vehicle wireless communication apparatus 3". In addition, processing of steps S101 to S104 is executed in each of the plurality of vehicles 2.

When features are calculated in each vehicle 2, data of each vehicle 2 is aggregated and accumulated in the feature aggregation DB 92 of the data aggregation apparatus 9 (step S107). In addition, a learned model is generated by causing the learner to learn the data accumulated in the feature aggregation DB 92 as learning data (step S108). In addition, the data aggregation apparatus 9 stores the generated learned model in each vehicle 2 (step S109).

In addition, information on the features stored in the feature DB 14 of each vehicle 2 and the learned model may be stored in advance in a database.

As described above, the communication environment evaluation apparatus 10A according to the second embodiment is installed in the vehicle 2, whereas the communication environment evaluation apparatus 10 according to the first embodiment is installed on the ground. In this case, the information acquisition unit 11 acquires received data of communication packets transmitted by the ground wireless communication apparatus 8 and received by the on-vehicle wireless communication apparatus 3. In the communication environment evaluation apparatus 10 installed on the ground as in the first embodiment, the information acquisition unit 11 acquires received data of communication packets from the plurality of vehicles 2. However, as described above, in the communication environment evaluation apparatus 10A installed in the vehicle 2, the information acquisition unit 11 acquires received data of communication packets received in the single vehicle 2. Thus, the communication environment evaluation system 1A according to the second embodiment further includes the data aggregation apparatus 9 that is installed on the ground and aggregates evaluation results transmitted from the plurality of communication environment evaluation apparatuses 10A. Thus, it is also possible to confirm the communication environment of each vehicle 2 operating along the line under management. In addition, by aggregating information on the features of each vehicle 2, it is possible to share data having the same vehicle condition and the same operation condition among different vehicles 2.

### Third Embodiment.

A communication environment evaluation system 1B (not illustrated) according to a third embodiment includes a communication environment evaluation apparatus 10B instead of the communication environment evaluation apparatus 10 of the communication environment evaluation system 1 according to the first embodiment. Other configurations of the communication environment evaluation system 1B are the same as those in the first embodiment.

The communication environment evaluation apparatus 10B has the same functional configuration as the communication environment evaluation apparatus 10. However, since some operations differ from those of the communication environment evaluation apparatus 10, only differences will be described below using the reference numerals used in the communication environment evaluation apparatus 10. The communication environment evaluation apparatus 10B performs, in advance, labeling of learning data on data acquired for each application type, time period, section, vehicle condition, and operation condition, and analyzes the data. The third embodiment differs from the first embodiment in the processing executed by the feature calculation unit 13 and in the operation for generating a learned model performed by the feature DB 14. In the third embodiment, differences from the first embodiment will mainly be described, and description of portions that are the same as those in the first embodiment will be omitted.

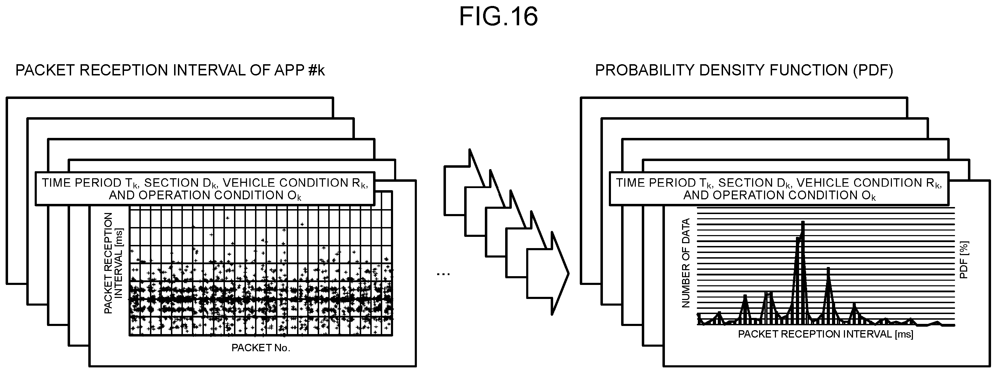

FIG. 16 is an explanatory diagram of processing for calculating reception intervals of communication packets in the third embodiment. After the received data is classified by the application identification unit 12 for each application type, time period, section, vehicle condition, and operation condition, the feature calculation unit 13 calculates reception intervals of the communication packets. In the first embodiment, in each application, reception intervals are calculated for each data item classified for each time period, section, vehicle condition, and operation condition, and are further calculated separately for each PDF calculation section. In the third embodiment, reception intervals are calculated collectively without providing PDF calculation sections. In addition, the feature calculation unit 13 calculates a probability density function from reception intervals.

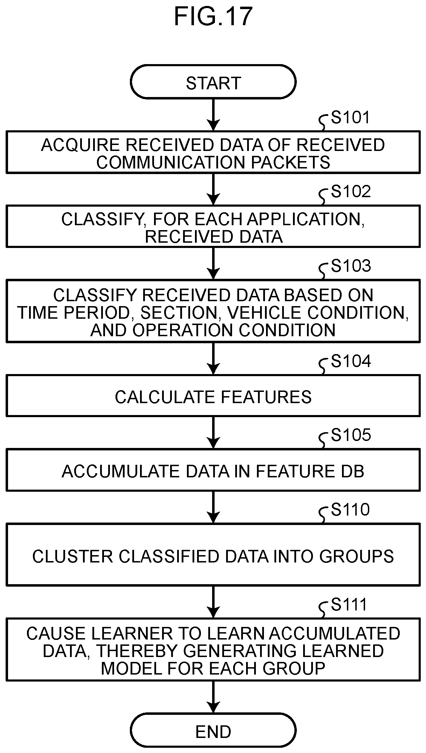

FIG. 17 is a flowchart for describing learning processing in the third embodiment. Processing of steps S101 to S105 is the same as that in the first embodiment. However, as described above, in calculation of features in step S104, reception intervals and PDFs are calculated without providing PDF calculation sections. The feature DB 14 clusters the classified data into groups (step S110). In addition, the feature DB 14 causes the learner to learn the accumulated data, thereby generating a learned model for each group (step S111).

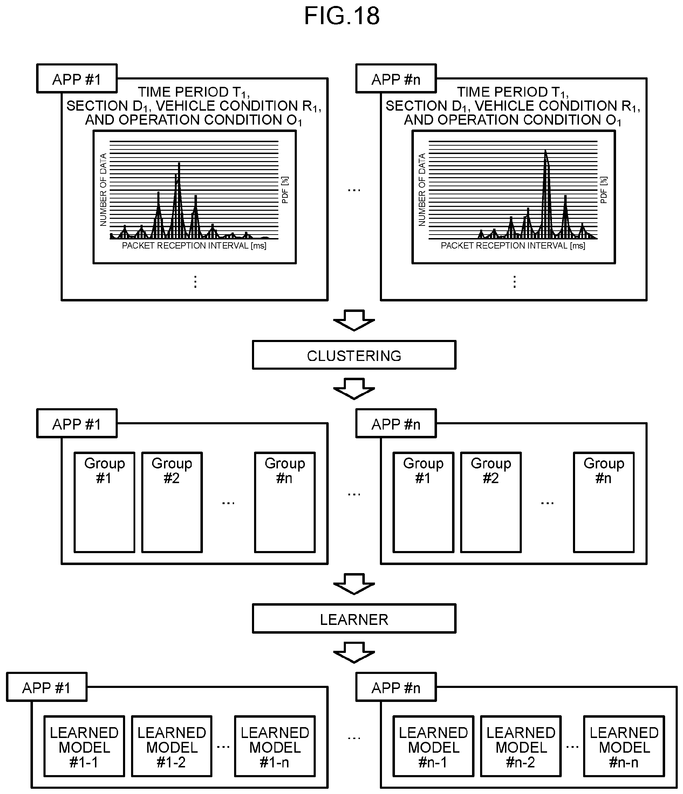

FIG. 18 is an explanatory diagram of learning processing in the third embodiment. As illustrated in FIG. 16, the PDFs of reception intervals are subdivided, for each application, based on the time period, the section, the vehicle condition, and the operation condition. In this case, the number of labels for learning data increases by the number of combinations of conditions for classification. Thus, the feature DB 14 clusters data subdivided based on the time period, the section, the vehicle condition, and the operation condition into groups of highly similar data. The clustering technique is not particularly limited. For example, the feature DB 14 may use a hierarchical clustering technique such as a group average method, Ward's method, or a single linkage method, or may use a non-hierarchical clustering technique such as a k-means method. This provides the effect that the number of labels for learning data can be reduced, and furthermore, the number of learning data can also be reduced. The number of groups classified by clustering is assumed to be freely settable. The feature DB 14 generates, for each group obtained by clustering, a learned model using the learner.

As described above, in the communication environment evaluation apparatus 10B according to the third embodiment, the feature DB 14 can cluster features calculated by the feature calculation unit 13 for each of the above classifications based on the values of the received data into groups of highly similar data, and can accumulate, in association with the groups, learned models for outputting evaluation results of communication environments based on features generated for each group in each of the classifications. Thus, in addition to effects of the first embodiment, since learning data is grouped by clustering before generation of learned models, an effect is provided that the number of labels for learning data can be reduced. Accordingly, learning data can be efficiently collected.

### Fourth Embodiment.

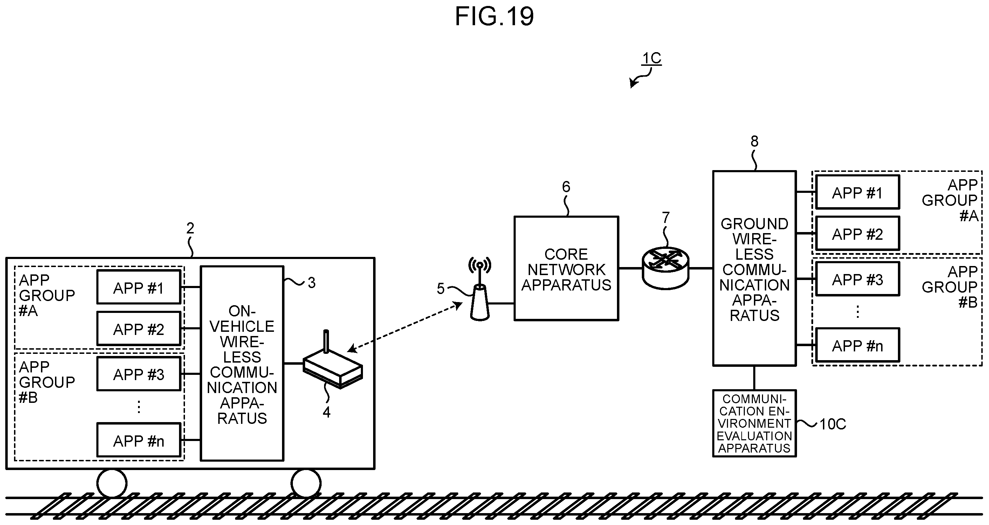

FIG. 19 is a diagram illustrating an exemplary configuration of a communication environment evaluation system 1C according to a fourth embodiment. The communication environment evaluation system 1C includes a communication environment evaluation apparatus 10C that evaluates a communication environment for each application group obtained by grouping a plurality of applications, instead of the communication environment evaluation apparatus 10 of the communication environment evaluation system 1.

A functional configuration of the communication environment evaluation apparatus 10C is the same as that of the communication environment evaluation apparatus 10. However, the communication environment evaluation apparatus 10C evaluates only one representative application among the applications in an application group, and uses an evaluation result as an evaluation result for applications included in the same application group. Alternatively, the communication environment evaluation apparatus 10C may treat a plurality of applications included in the same application group as the same type, acquire data, and evaluate the data. Since other operations are the same as those in the first embodiment, detailed description thereof will be omitted.

As described above, in the communication environment evaluation system 1C according to the fourth embodiment, a plurality of applications is classified into application groups each obtained by grouping a plurality of applications having similar communication conditions, and the evaluation unit 15 can evaluate a communication environment for each application group. For example, the evaluation unit 15 may evaluate only one representative application among the applications in the application group and use an evaluation result as an evaluation result for the application group, or may handle data by treating a plurality of applications included in the same application group as the same type. In any case, it is no longer necessary to analyze each application individually, and highly similar applications can be evaluated as an application group. Thus, in addition to the effects of the first embodiment, an effect is provided that the efficiency of processing for data acquisition and evaluation can be improved.

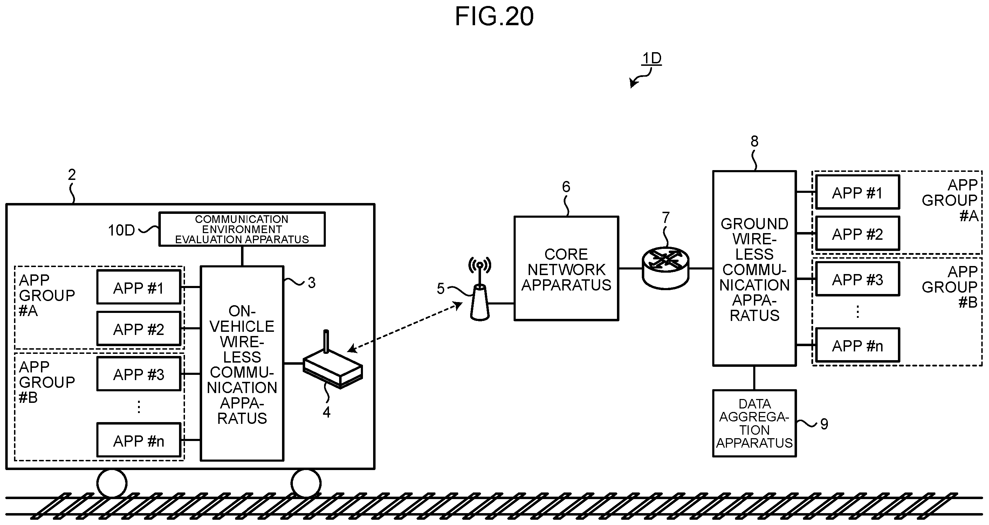

FIG. 20 is a diagram illustrating an exemplary configuration of a communication environment evaluation system 1D according to a modification example of the fourth embodiment. In the communication environment evaluation system 1C illustrated in FIG. 19, the communication environment evaluation apparatus 10C is installed on the ground side. As a difference from this, in FIG. 20, a communication environment evaluation apparatus 10D is installed on the vehicle 2 and the data aggregation apparatus 9 is installed on the ground. The communication environment evaluation apparatus 10D evaluates a communication environment for each application group obtained by grouping a plurality of applications, similarly to the communication environment evaluation apparatus 10C. In addition, similarly to the communication environment evaluation apparatus 10A according to the second embodiment, the communication environment evaluation apparatus 10D is installed on the vehicle 2 and analyzes communication packets received by the on-vehicle wireless communication apparatus 3.

### Fifth Embodiment.

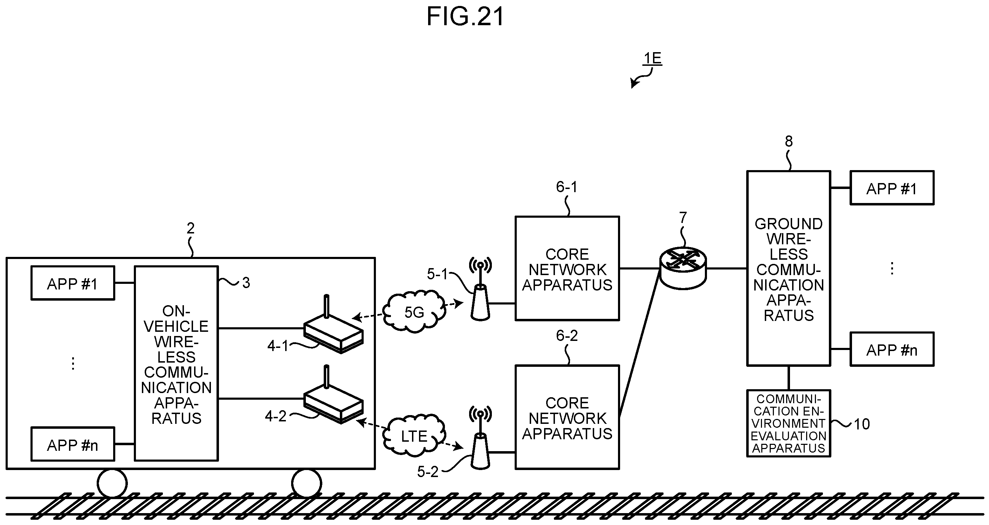

FIG. 21 is a diagram illustrating an exemplary configuration of a communication environment evaluation system 1E according to a fifth embodiment. In the communication environment evaluation system 1 according to the first embodiment, the on-vehicle wireless communication apparatus 3 and the ground wireless communication apparatus 8 are connected via one type of wireless communication network; however, in the communication environment evaluation system 1E, the on-vehicle wireless communication apparatus 3 and the ground wireless communication apparatus 8 are connected via a plurality of types of wireless communication networks.

The communication environment evaluation system 1E includes: the on-vehicle wireless communication apparatus 3 installed in the vehicle 2; on-vehicle terminals 4-1 and 4-2 each corresponding to a corresponding one of a plurality of wireless communication networks; base stations 5-1 and 5-2 each corresponding to a corresponding one of the plurality of wireless communication networks; core network apparatuses 6-1 and 6-2 each corresponding to a corresponding one of the plurality of wireless communication networks; the connection router 7; the ground wireless communication apparatus 8; and the communication environment evaluation apparatus 10.

In the example illustrated in FIG. 21, the on-vehicle wireless communication apparatus 3 and the ground wireless communication apparatus 8 are connected via a route through a 5G network and a route through a Long Term Evolution (LTE) network. Note that the 5G network and the LTE network may be public networks or may be private networks. That is, examples of wireless communication networks to be used include 5G of a public network, LTE of a public network, local 5G of a private network, private LTE of a private network, a private network that is designed and managed by a railway operator itself, and the like.

In the communication environment evaluation system 1E, each of a plurality of applications uses a different wireless communication network in accordance with the requirements of the application. A reception interval distribution of communication packets for each application acquired by the communication environment evaluation apparatus 10 changes in tendency in accordance with a transmission cycle of the application and scheduling of the wireless communication network to be used.

Since the communication environment evaluation apparatus 10 collects, in advance, learning data for each application, it is possible to perform evaluation in accordance with the requirements of the application and characteristics of the wireless communication network. However, in this case, it is not assumed that a wireless communication network to be used is switched midway in accordance with a communication environment, a priority, or the like.

As described above, in the communication environment evaluation system 1E according to the fifth embodiment, the on-vehicle wireless communication apparatus 3 and the ground wireless communication apparatus 8 are connected via a plurality of types of wireless communication networks. Each application uses a wireless communication network having characteristics suitable for the requirements of the application. Thus, in addition to effects of the first embodiment, the communication environment evaluation system 1E according to the fifth embodiment can provide an effect that it is possible to evaluate a communication environment for each application even when a connection is established via a different wireless communication network for each application.

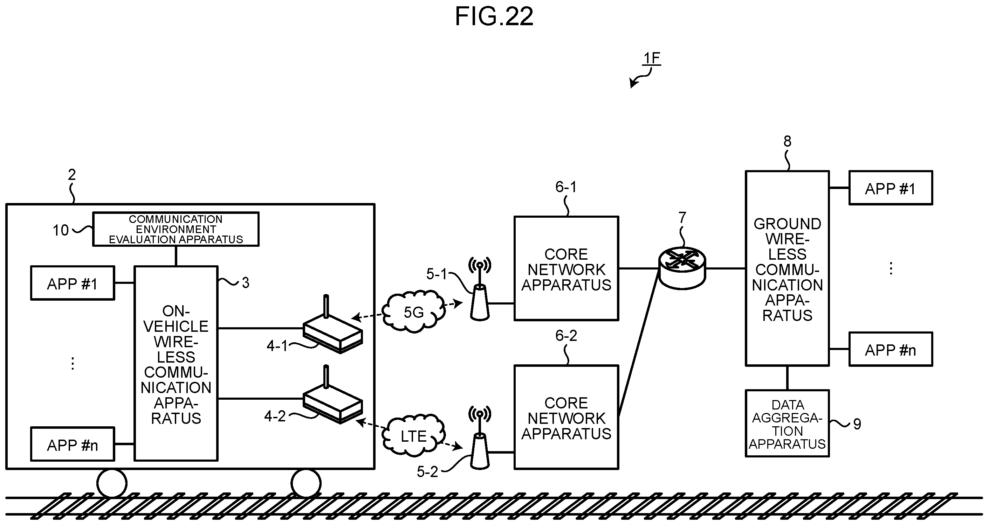

FIG. 22 is a diagram illustrating an exemplary configuration of a communication environment evaluation system 1F according to a modification example of the fifth embodiment. In the communication environment evaluation system 1E illustrated in FIG. 21, the communication environment evaluation apparatus 10 is installed on the ground side. As a difference from this, in FIG. 22, the communication environment evaluation apparatus 10 is installed on the vehicle 2 and the data aggregation apparatus 9 is installed on the ground. Also in the communication environment evaluation system 1F, the on-vehicle wireless communication apparatus 3 and the ground wireless communication apparatus 8 are connected via a plurality of types of wireless communication networks. Each application uses a wireless communication network having characteristics suitable for the requirements of the application. In addition, also in the communication environment evaluation system 1F, similarly to the communication environment evaluation apparatus 10A according to the second embodiment, the communication environment evaluation apparatus 10 is installed on the vehicle 2 and analyzes communication packets received by the on-vehicle wireless communication apparatus 3.

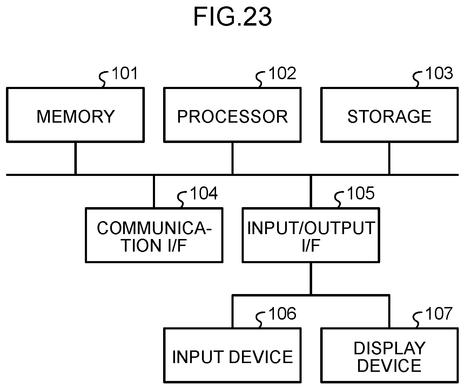

A hardware configuration will now be described. FIG. 23 is a diagram illustrating an exemplary hardware configuration of the communication environment evaluation apparatuses 10, 10A, 10B, 10C, and 10D according to the first to fifth embodiments, and the data aggregation apparatus 9 according to the second embodiment.

The hardware illustrated in FIG. 23 includes a memory 101, a processor 102, a storage 103, a communication InterFace (I/F) 104, and an input/output I/F 105. The memory 101, the processor 102, the storage 103, the communication I/F 104, and the input/output I/F 105 are connected to each other via a data transmission path for transmitting and receiving data to and from each other.

The memory 101 is, for example, a memory such as a Random Access Memory (RAM) or a Read Only Memory (ROM). The processor 102 is, for example, an arithmetic processing apparatus such as a Central Processing Unit (CPU) or a Graphics Processing Unit (GPU). The storage 103 is, for example, a storage device such as a Hard Disk Drive (HDD), a Solid State Drive (SSD), or a memory card. In addition, the storage 103 may be a memory such as a RAM or a ROM.

The storage 103 stores programs for implementing functions of components included in the communication environment evaluation apparatus 10, 10A, 10B, 10C, or 10D, or the data aggregation apparatus 9. The processor 102 implements functions of components included in the communication environment evaluation apparatus 10, 10A, 10B, or 10C, or the data aggregation apparatus 9 by executing each of the programs.

The communication I/F 104 transmits and receives data to and from an external apparatus. For example, the communication I/F 104 communicates with an external apparatus via a wired communication path.

The input/output I/F 105 is connected to an input device 106 and a display device 107. The input device 106 is a device that receives an operation input by an operator, and is, for example, a keyboard, a mouse, or a touch sensor. The display device 107 is a device that displays drawing data processed by the processor 102 on a monitor.

The features illustrated in connection with the above embodiments are illustrative only and may be combined with the other known techniques. Some or all of the embodiments may be combined with each other. The features may partially be omitted or modified without departing from the gist.

### Reference Signs List

1, 1A, 1B, 1C, 1D, 1E, 1F communication environment evaluation system; 2, 2-1 to 2-n vehicle; 3 on-vehicle wireless communication apparatus; 4 on-vehicle terminal; 5 base station; 6 core network apparatus; 7 connection router; 8 ground wireless communication apparatus; 9 data aggregation apparatus; 10, 10A, 10B, 10C, 10D communication environment evaluation apparatus; 11 information acquisition unit; 12 application identification unit; 13 feature calculation unit; 14 feature DB; 15 evaluation unit; 16 storage unit; 17 display unit; 101 memory; 102 processor; 103 storage; 104 communication I/F; 105 input/output I/F; 106 input device; 107 display device.

## Claims

1. A communication environment evaluation apparatus comprising:
an information acquisition unit to acquire received data of communication packets of a plurality of applications transmitted between an on-vehicle wireless communication apparatus installed in a vehicle and a ground wireless communication apparatus installed on a ground;
an application identification unit to identify the application of each of the communication packets; and
an evaluation unit to analyze the received data of the application identified and to evaluate a change in a communication environment for each of the applications.

2. The communication environment evaluation apparatus according to claim 1, further comprising
a feature calculation unit to calculate, from the received data, features indicating characteristics of the communication packets, wherein
the evaluation unit analyzes the communication packets based on the features calculated by the feature calculation unit.

3. The communication environment evaluation apparatus according to claim 2, further comprising
a feature database to accumulate, for each classification based on the received data, the features calculated by the feature calculation unit.

4. The communication environment evaluation apparatus according to claim 3, wherein
the feature database stores, for each classification, learned models for outputting evaluation results of the communication environments based on the features.

5. The communication environment evaluation apparatus according to claim 4, wherein
the evaluation unit acquires, from the feature database, the learned model corresponding to the classification of the received data of each of the communication packets, and evaluates the communication environment using the features of the communication packet and the learned model acquired.

6. The communication environment evaluation apparatus according to claim 1, further comprising:
a storage unit to accumulate an evaluation result from the evaluation unit; and
a display unit to display, based on the evaluation result accumulated in the storage unit, the evaluation result on a display screen for each classification based on the received data.

7. The communication environment evaluation apparatus according to claim 1, wherein
the communication environment evaluation apparatus is installed on the ground, and
the information acquisition unit acquires the received data of the communication packets transmitted by the on-vehicle wireless communication apparatus and received by the ground wireless communication apparatus.

8. The communication environment evaluation apparatus according to claim 1, wherein
the communication environment evaluation apparatus is installed in the vehicle, and
the information acquisition unit acquires the received data of the communication packets transmitted by the ground wireless communication apparatus and received by the on-vehicle wireless communication apparatus.

9. The communication environment evaluation apparatus according to any one of claims 1 to 8, wherein
the information acquisition unit acquires the received data including at least one of information indicating an application type, information indicating reception times of the communication packets, and vehicle information indicating a characteristic of a vehicle in which the on-vehicle wireless communication apparatus to transmit the communication packets is installed, and
the application identification unit classifies the communication packets based on the received data.

10. The communication environment evaluation apparatus according to claim 9, wherein
the vehicle information includes at least one of position information of the vehicle, a vehicle condition of the vehicle, and an operation condition of the vehicle.

11. The communication environment evaluation apparatus according to claim 6, wherein
the display unit displays the evaluation result for each time period and for each section in which the vehicle is located, regarding an application for which the evaluation result is to be displayed, a vehicle condition of a vehicle in which the on-vehicle wireless communication apparatus to transmit the communication packets is installed, and an operation condition of the vehicle.

12. The communication environment evaluation apparatus according to claim 2, further comprising
a feature database to cluster the features calculated by the feature calculation unit for each classification based on values of the received data into groups of highly similar data, and to accumulate, in association with the groups, learned models for outputting evaluation results of the communication environments based on the features generated for each group in each of the classifications.

13. The communication environment evaluation apparatus according to claim 1, wherein
the plurality of applications are classified into application groups each obtained by grouping the plurality of applications having similar communication conditions, and
the evaluation unit evaluates the communication environment for each application group.

14. A communication environment evaluation system to evaluate communication environments of communication packets of a plurality of applications transmitted between an on-vehicle wireless communication apparatus installed in a vehicle and a ground wireless communication apparatus installed on a ground, the communication environment evaluation system comprising
a communication environment evaluation apparatus including:
an information acquisition unit to acquire received data of the communication packets of the plurality of applications transmitted between the on-vehicle wireless communication apparatus and the ground wireless communication apparatus;
an application identification unit to identify the application of each of the communication packets; and
an evaluation unit to analyze the received data of the application identified and to evaluate a change in a communication environment for each application.

15. The communication environment evaluation system according to claim 14, wherein
the communication environment evaluation apparatus is installed in each of a plurality of the vehicles, and
the communication environment evaluation system further comprises a data aggregation apparatus installed on the ground and to aggregate evaluation results transmitted from a plurality of the communication environment evaluation apparatuses.

16. The communication environment evaluation system according to claim 14, wherein
the on-vehicle wireless communication apparatus and the ground wireless communication apparatus are connected via a plurality of types of wireless communication networks.

17. A communication environment evaluation method comprising:
a step of acquiring received data of communication packets of a plurality of applications transmitted between an on-vehicle wireless communication apparatus installed in a vehicle and a ground wireless communication apparatus installed on a ground;
a step of identifying the application of each of the communication packets; and
a step of analyzing the received data of the application identified and evaluating a communication environment for each of the applications.
